# EUROPEAN PATENT APPLICATION

(11) **EP 4 651 214 A1**
(43) Date of publication of application: **19.11.2025**
(21) Application number: 24849464.3
(22) Date of filing: 24.07.2024
(51) Int. Cl.: H01M 4/02, H01M 4/04, H01M 4/66, H01M 4/70, H01M 10/04, H01M 50/46, B26D 1/08, B26D 1/00

(54) **ELECTRODE, ELECTRODE ASSEMBLY, AND ELECTRODE CUTTING DEVICE**

(30) Priority: 31.07.2023 KR 20230099955
(71) Applicant: LG Energy Solution, Ltd., Seoul 07335 (KR)
(72) Inventor: KIM, Jae Hee, Daejeon 34122 (KR); NOH, Jae Kyo, Daejeon 34122 (KR); KOO, Seong Mo, Daejeon 34122 (KR)
(74) Representative: Goddar, Heinz J.
(86) International application number: PCT/KR2024/010724
(87) International publication number: WO 2025/028895

(57) **Abstract**

The present disclosure relates to an electrode, and provides an electrode including a current collector formed of a metal foil; and a first electrode active material layer coated on one surface of the current collector and having a compressed portion compressed by pressing a predetermined region formed, wherein the compressed portion is formed at the end portion of the first electrode active material layer and is formed to have a higher density than a region located further inward than the compressed portion.

Additionally, the present disclosure relates to an electrode assembly, and provides an electrode assembly in which at least one of a separator and an electrode is stacked and wound, including a core formed at the center around which the separator and the electrode are wound, wherein the electrode includes a current collector formed of a metal foil; and a first electrode active material layer coated on one surface of the current collector and having a compressed portion compressed by pressing a predetermined region formed, wherein the compressed portion is formed at the end portion of the first electrode active material layer and is formed to have a higher density than a region located further inward than the compressed portion.

Additionally, the present disclosure relates to an electrode cutting device, and provides an electrode cutting device including a cutter provided to cut a current collector coated with an electrode active material; and a pressing portion that protrudes from both side surfaces of the cutter at a position spaced apart from the end of the cutter and presses one side surface of the cutting surface cut by the cutter to increase the density of the electrode active material.

## Description

### TECHNICAL FIELD

### CROSS-REFERENCE TO RELATED APPLICATIONS

The present application claims priority to Korean Patent Application No. 10-2023-0099955 filed on July 31, 2023 in the Republic of Korea, the disclosures of which are incorporated herein by reference.

### TECHNICAL FIELD

The present disclosure relates to an electrode, an electrode assembly, and an electrode cutting device, and more specifically, to an electrode having an increased density of an electrode active material layer coated on a current collector, an electrode assembly, and an electrode cutting device.

### BACKGROUND ART

A secondary battery is highly applicable to a variety of product groups and has electrical characteristics with high energy density. Such a secondary battery is applied not only to portable electronic devices but also to electric vehicles, hybrid vehicles, power storage devices, or the like driven by electric power sources. The secondary battery is attracting attention as a new energy source to improve eco-friendliness and energy efficiency in that it has not only a primary advantage of dramatically reducing the use of fossil fuels, but also no by-products generated from the use of energy.

The electrode assembly included in the secondary battery includes a separator and an electrode, and depending on the manufacturing method of the electrode assembly, it may be classified into a jelly-roll type in which a sheet-like positive electrode and negative electrode coated with an electrode active material having a separator interposed therebetween are wound, a stack type in which a plurality of positive electrodes and negative electrodes are sequentially stacked with a separator interposed therebetween, and a stack/folding type in which stack-type unit cells are wound with a long separation film.

However, in the manufacturing process of a jelly-roll type electrode assembly, a process of cutting the electrode to the intended length is required, and when assembling an electrode assembly by winding the cut electrode and separator, there is a problem that damage such as bending of the separator due to the step formed on the cutting surface of the electrode end occurs. Additionally, there is a problem that the current collector and electrode active material layer are easily peeled off from the cutting surface of the electrode, which may cause an electrical short circuit. Accordingly, there is a need for the development of a technology to solve the above problem.

### SUMMARY

### TECHNICAL PROBLEM

The present disclosure is designed to solve the problems of the related art, and therefore the present disclosure is directed to providing an electrode in which the end portion of an electrode active material layer coated on a current collector is compressed to form a higher density than an inner region so that the end portion is not peeled off from the current collector, and a slope is formed at the end portion of the electrode to reduce damage to a separator in contact with the end portion of the electrode when manufacturing an electrode assembly, an electrode assembly including the same, and an electrode cutting device.

### TECHNICAL SOLUTION

As Embodiment 1 of the present disclosure, the present disclosure provides an electrode including a current collector formed of a metal foil; and a first electrode active material layer coated on one surface of the current collector and having a compressed portion compressed by pressing a predetermined region formed, wherein the compressed portion is formed at the end portion of the first electrode active material layer and has a higher density than a region located further inward than the compressed portion.

Additionally, the end of the compressed portion may coincide with the end of the current collector.

Additionally, the electrode may further include a second electrode active material layer coated on the other surface of the current collector.

Additionally, the second electrode active material layer may be formed asymmetrically with the first electrode active material layer based on the current collector.

Additionally, the compressed portion may be formed as a continuous inclined surface with the upper surface facing the current collector.

Additionally, the compressed portion may be formed with a slope so that the upper surface decreases in height intermittently toward the current collector as it approaches the end.

Additionally, as Embodiment 2 of the present disclosure, the compressed portion may include a first portion forming the end of the compressed portion and formed in a direction perpendicular to one surface of the current collector; a second portion spaced apart from the first portion by a predetermined distance along the slope direction and formed in a direction perpendicular to one surface of the current collector; and a third portion formed between the first portion and the second portion and formed in a direction perpendicular to the second portion.

Additionally, as Embodiment 3 of the present disclosure, the second portion and the third portion may be provided in plurality, the plurality of second portions may be formed to be spaced apart from each other along the slope direction, and the plurality of third portions may be formed to connect the first portion and the second portion and between the plurality of second portions.

Additionally, as Embodiment 4 of the present disclosure, the present disclosure provides an electrode assembly in which at least one of a separator and an electrode is stacked and wound, including a core formed at the center around which the separator and the electrode are wound, wherein the electrode includes a current collector formed of a metal foil; and a first electrode active material layer coated on one surface of the current collector and having a compressed portion compressed by pressing a predetermined region formed, wherein the compressed portion is formed at the end portion of the first electrode active material layer and is formed to have a higher density than a region located further inward than the compressed portion.

Additionally, the compressed portion may be disposed to face the core so that the separator may cover it.

Additionally, the compressed portion may be formed as a continuous inclined surface with the upper surface facing the current collector.

Additionally, the compressed portion may be formed with a slope so that the upper surface decreases in height intermittently toward the current collector as it approaches the end.

Additionally, as Embodiment 5 of the present disclosure, the present disclosure provides an electrode cutting device including a cutter provided to cut a current collector coated with an electrode active material; and a pressing portion that protrudes from both side surfaces of the cutter at a position spaced apart from the end of the cutter and presses one side surface of the cutting surface cut by the cutter to increase the density of the electrode active material.

Additionally, the pressing portion may include an inclined pressing surface formed with a continuous slope so as to move away from both side surfaces of the cutter as it is farther away from the end of the cutter.

Additionally, the pressing portion may include an inclined pressing surface formed with a slope so that the height of the protrusion increases intermittently as it is farther away from the end of the cutter.

Additionally, as Embodiment 6 of the present disclosure, the inclined pressing surface may include a plurality of first pressing surfaces spaced apart by a predetermined distance along the slope direction and formed in a direction perpendicular to one side surface of the cutter; and a second pressing surface formed between the plurality of first pressing surfaces and formed in a direction perpendicular to the first pressing surface.

Additionally, as Embodiment 7 of the present disclosure, the second pressing surface may be provided in plurality, and the plurality of second pressing surfaces may be formed to connect between the plurality of first pressing surfaces.

### ADVANTAGEOUS EFFECTS

The present disclosure may improve the adhesion between the electrode active material layer and the current collector by compressing the end portion of the electrode active material layer coated on the current collector, and may reduce the possibility of the electrode active material layer being peeled off from the current collector.

Additionally, since a slope is formed at the end portion of the electrode, the contact area between the end portion of the electrode and the separator is increased when manufacturing the electrode assembly, and thus damage such as bending of the separator due to the step formed by the thickness of the electrode may be reduced.

### BRIEF DESCRIPTION OF THE DRAWINGS

FIG. 1 is a perspective view showing a state in which an electrode is cut by an electrode cutting device of the present disclosure.
FIG. 2 is a cross-sectional view showing an electrode formed with a continuous slope at the end portion of a first electrode active material layer according to Embodiment 1 of the present disclosure.
FIG. 3 is a cross-sectional view showing an electrode formed with a discontinuous slope at the end portion of a first electrode active material layer according to Embodiment 2 of the present disclosure.
FIG. 4 is a cross-sectional view showing an electrode formed with a discontinuous slope at the end portion of a first electrode active material layer according to Embodiment 3 of the present disclosure.
FIG. 5 is a perspective view showing an electrode assembly according to Embodiment 4 of the present disclosure.
FIG. 6 is an enlarged cross-sectional view showing the dotted line region of FIG. 5 according to Embodiment 4 of the present disclosure.
FIG. 7 is a cross-sectional view showing a cross-section of the electrode cutting device of FIG. 1 cut in the direction AA' according to Embodiment 5 of the present disclosure.
FIG. 8 is a cross-sectional view showing a cross-section of an electrode cutting device cut in a direction perpendicular to the length direction according to Embodiment 6 of the present disclosure.
FIG. 9 is a cross-sectional view showing a cross-section of an electrode cutting device cut in a direction perpendicular to the length direction according to Embodiment 7 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

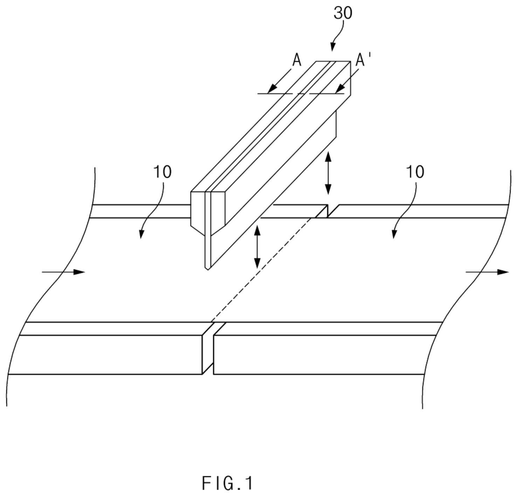

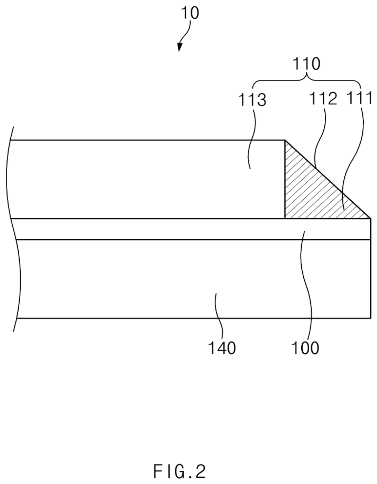

Referring to FIGS. 1 and 2, as Embodiment 1 of the present disclosure, the electrode 10 may include a current collector 100 and a first electrode active material layer 110. Additionally, the electrode 10 may further include a second electrode active material layer 140. The electrode 10 may be a positive electrode or a negative electrode.

The current collector 100 may be formed of a metal foil formed with a predetermined width, a predetermined length, and a thickness of 5 to 20 µm.

The current collector 100 may be formed by including at least one metal material among aluminum, stainless steel, nickel, titanium, and copper.

The first electrode active material layer 110 may be coated on one surface of the current collector 100.

The first electrode active material layer 110 may include a compressed portion 111, which is a region where a predetermined region is pressed and compressed, and an uncompressed portion 113, which is a region that is not pressed.

The compressed portion 111 may be formed at the end portion of the first electrode active material layer 110. The compressed portion 111 may be formed in a region adjacent to a cutting surface when the current collector 100 coated with the first electrode active material layer 110 and the second active material layer 140 is cut by an electrode cutting device 30. More specifically, the compressed portion 111 may be formed on one side of the cutting surface.

The compressed portion 111 may improve the adhesion to the current collector 100 as a predetermined region of the first electrode active material layer 110 coated on the current collector 100 is pressed and compressed. When cutting the current collector 100 coated with the first electrode active material 110, the coated first electrode active material 110 receives an external force in an inward direction by the cutting blade, which weakens the adhesion between the first electrode active material 110 and the current collector 100, and thus there may be a problem that the end portion of the first electrode active material 110 is peeled off from the current collector 100. Accordingly, the adhesion between the first electrode active material layer 110 and the current collector 100 may be improved by pressing the end portion of the first electrode active material layer 110 coated on the current collector 100 to form the compressed portion 111.

Since the compressed portion 111 is pressed and compressed by the electrode cutting device 30, it may be formed to have a higher density than the uncompressed portion 113 located in the inner region with respect to the compression portion 111.

The uncompressed portion 113 is located in the inner region with respect to the compression portion 111 in the first active material layer and may be a region that is not pressed by the electrode cutting device 30. The uncompressed portion 113 may be formed to have a lower density than the compressed portion 111.

The end of the compressed portion 111 may be formed to coincide with the end of the current collector 100 as it is cut together with the current collector 100 by the electrode cutting device 30. Since the end of the compressed portion 111 is formed to coincide with the end of the current collector 100, the ratio of the uncoated portion, which is the region where the first electrode active material 110 is not coated, may be minimized, and the ratio of the coated portion, which is the region where the first electrode active material 110 is coated, may be increased. The coated portion, which substantially generates electrical energy through a chemical reaction, may improve the energy density of the electrode assembly 20 and the secondary battery of the same volume when the ratio thereof is increased.

The upper surface of the compressed portion 111 may be formed as a continuous inclined surface 112 facing the current collector 100. The inclined surface 112 formed in the compressed portion 111 may be formed in a downward direction toward the end of the current collector 100.

The compressed portion 111 may increase in density toward the end as it is pressed more strongly by the electrode cutting device 30 toward the end. Since the region where the first electrode active material 110 begins to be peeled off from the current collector 100 is the end, the end of the compressed portion 111 may be formed with the highest density, and thus the end of the first electrode active material layer 110 may form the strongest adhesion to the current collector 100.

When manufacturing an electrode assembly 20 including the electrode 10, the inclined surface 112 may prevent damage such as bending of the separator 210 in contact with one surface of the electrode 10 due to the step caused by the thickness of the electrode 10, and may cushion the impact by dispersing the impact applied to the separator 210 due to contact with the end portion of the electrode 10.

The inclined surface 112 formed on the upper surface of the compressed portion 111 may be formed as a flat surface.

The electrode 10 may further include a second electrode active material layer 140 coated on the other surface of the current collector 100.

The second electrode active material layer 140 may include the same material as the material of the first electrode active material layer 110.

The second electrode active material layer 140 is not directly pressed by the electrode cutting device 30 as it is not positioned in a region facing the electrode cutting device 30, and thus it may be formed asymmetrically with the first electrode active material layer 110 based on the current collector 100.

The end of the second electrode active material layer 140 may be formed to coincide with the end of the current collector 100 as it is cut together with the current collector 100 by the electrode cutting device 30. Since the end of the second electrode active material layer 140 is formed to coincide with the end of the current collector 100, the ratio of the uncoated portion may be minimized, and the ratio of the coated portion coated with the first electrode active material 110 may be increased. The coated portion, which substantially generates electrical energy through a chemical reaction, may improve the energy density of the electrode assembly 20 and the secondary battery of the same volume when the ratio thereof is increased.

### Embodiment 2

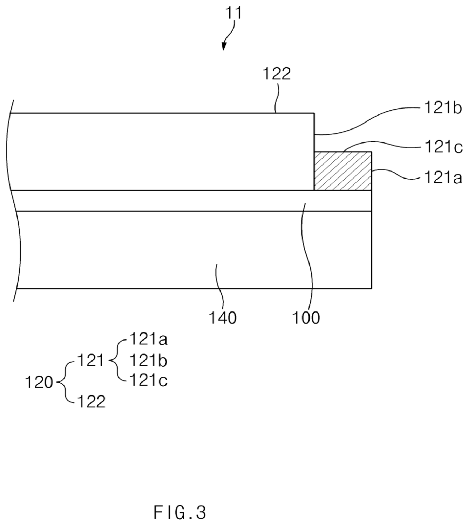

Referring to FIG. 3, as Embodiment 2 of the present disclosure, the electrode 11 may include a current collector 100 and a first electrode active material layer 120. Additionally, the electrode 11 may further include a second electrode active material layer 140. The electrode 11 may be a positive electrode or a negative electrode.

The current collector 100 may be formed of a metal foil formed with a predetermined width, a predetermined length, and a thickness of 5 to 20 µm.

The current collector 100 may be formed by including at least one metal material among aluminum, stainless steel, nickel, titanium, and copper.

The first electrode active material layer 120 may be coated on one surface of the current collector 100.

The first electrode active material layer 120 may include a compressed portion 121, which is a region where a predetermined region is pressed and compressed, and an uncompressed portion 122, which is a region that is not pressed.

The compressed portion 121 may be formed at the end portion of the first electrode active material layer 120. The compressed portion 121 may be formed in a region adjacent to a cutting surface when the current collector 100 coated with the first electrode active material layer 120 and the second active material layer 140 is cut by an electrode cutting device 31. More specifically, the compressed portion 121 may be formed on one side of the cutting surface.

The compressed portion 121 may be configured to improve the adhesion to the current collector 100 as a predetermined region of the first electrode active material layer 120 coated on the current collector 100 is pressed and compressed. When cutting the current collector 100 coated with the first electrode active material 120, the coated first electrode active material 120 receives an external force in an inward direction by the cutting blade, which weakens the adhesion between the first electrode active material 120 and the current collector 100, and thus there may be a problem that the end portion of the first electrode active material 120 is peeled off from the current collector 100. Accordingly, the adhesion between the first electrode active material layer 120 and the current collector 100 may be improved by pressing the end portion of the first electrode active material layer 120 coated on the current collector 100 to form the compressed portion 121.

Since the compressed portion 121 is pressed and compressed by the electrode cutting device 31, it may be formed to have a higher density than the uncompressed portion 122 located in the inner region with respect to the compression portion 121.

The uncompressed portion 122 is located in the inner region with respect to the compression portion 121 in the first electrode active material layer 120 and may be a region that is not pressed by the electrode cutting device 31. The uncompressed portion 122 may be formed to have a lower density than the compressed portion 121.

The end of the compressed portion 121 may be formed to coincide with the end of the current collector 100 as it is cut together with the current collector 100 by the electrode cutting device 31. Since the end of the compressed portion 121 is formed to coincide with the end of the current collector 100, the ratio of the uncoated portion, which is the region where the electrode 11 active material is not coated, may be minimized, and the ratio of the coated portion, which is the region where the electrode 11 active material is coated, may be increased. The coated portion, which substantially generates electrical energy through a chemical reaction, may improve the energy density of the electrode assembly 20 and the secondary battery accommodating the electrode assembly 20 of the same volume when the ratio thereof is increased.

The compressed portion 121 may be formed with a slope so that the upper surface decreases in height intermittently toward the current collector 100 as it approaches the end. The compressed portion 121 may be formed in a step shape in which the height decreases as it approaches the end.

The compressed portion 121 may include a first portion 121a, a second portion 121b, and a third section 121c.

The first portion 121a may form the end of the compressed portion 121 by cutting the first electrode active material layer 120 by the cutter 300 of the electrode cutting device 31, and may be formed in a direction perpendicular to one surface of the current collector 100 that is the cutting direction.

The first portion 121a forms a cutting surface in which the first electrode active material layer 120 is cut by the cutter 300 of the electrode cutting device 31, and may be formed in the same plane as the end of the current collector 100 to coincide with the end of the current collector 100.

The upper end of the first portion 121a may meet one end of the third portion 121c in a perpendicular direction to form an intersection.

The second portion 121b is spaced apart from the first portion 121a along the slope direction formed in the compressed portion 121 by a predetermined distance, and may be formed in a direction perpendicular to one surface of the current collector 100. The second portion 121b may be positioned at a higher height than the first portion 121a.

The upper end of the second portion 121b may meet one end of the uncompressed portion 122 in a perpendicular direction to form an intersection.

The intersections may be formed in a region where the first portion 121a and the third portion 121c meet and in a region where the second portion 121b and the uncompressed portion 122 meet, and the intersections may form a slope that intermittently decreases or increases in height along the slope direction formed in the compressed portion 121. The intersections are regions in contact with the separator 210 when at least one of the electrode 11 and the separator 210 is stacked and wound to manufacture the electrode assembly 20, and may increase the contact area with the separator 210 to disperse force, and may gradually change the angle of the separator 210 to prevent the separator 210 from being bent and damaged due to the step caused by the thickness of the electrode 11.

The third portion 121c is formed between the first portion 121a and the second portion 121b, and may be formed in a direction perpendicular to the second portion 121b.

The third portion 121c may be formed by pressing the first electrode active material layer 120 by the pressing portion 320 of the electrode cutting device 31, and the pressing region of the pressing portion 320 is compressed, so that the third portion 121c may form the step in a downward direction with respect to the uncompressed portion 122. The second portion 121b may form the step between the uncompressed portion 122 and the third portion 121c, and may form a discontinuous slope by intermittently lowering the height of the first electrode active material layer 120 toward the end.

The third portion 121c may be formed by pressing the first electrode active material layer 120 by the pressing portion 320 of the electrode cutting device 31. Since the third portion 121c is pressed by the pressing portion 320, the electrode 11 active material coated on the current collector 100 may be compressed to increase the density, to improve the adhesion to the current collector 100, and to prevent the first electrode active material layer 120 from being peeled off from the current collector 100 due to external impact, chemical reaction, or the like.

The electrode 11 may further include a second electrode active material layer 140 coated on the other surface of the current collector 100.

Descriptions of the second electrode active material layer 140 may be replaced by those described in Embodiment 1.

### Embodiment 3

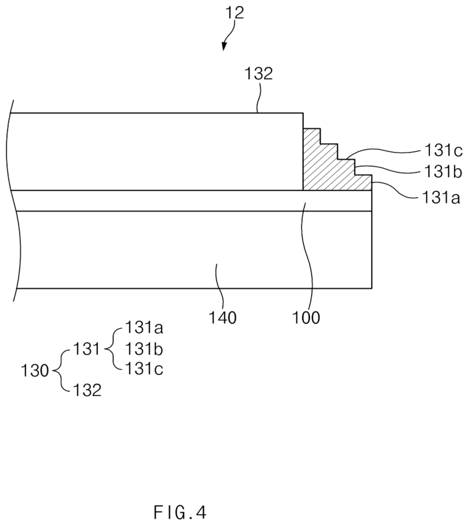

Referring to FIG. 4, as Embodiment 3 of the present disclosure, the electrode 12 may include a current collector 100 and a first electrode active material layer 130. Additionally, the electrode 120 may further include a second electrode active material layer 140. The electrode 12 may be a positive electrode or a negative electrode.

The current collector 100 may be formed of a metal foil formed with a predetermined width, a predetermined length, and a thickness of 5 to 20 µm.

The current collector 100 may be formed by including at least one metal material among aluminum, stainless steel, nickel, titanium, and copper.

The first electrode active material layer 130 may be coated on one surface of the current collector 100.

The first electrode active material layer 130 may include a compressed portion 131, which is a region where a predetermined region is pressed and compressed, and an uncompressed portion 132, which is a region that is not pressed.

The compressed portion 131 may be formed at the end portion of the first electrode active material layer 130. The compressed portion 131 may be formed in a region adjacent to a cutting surface when the current collector 100 coated with the first electrode active material layer 130 and the second active material layer 140 is cut by an electrode cutting device 32. More specifically, the compressed portion 131 may be formed on one side of the cutting surface.

The compressed portion 131 may be configured to improve the adhesion to the current collector 100 as the end portion of the first electrode active material layer 130 coated on the current collector 100 is pressed and compressed. When cutting the current collector 100 coated with the electrode 12 active material, the coated electrode 12 active material receives an external force in an inward direction by the cutting blade, which weakens the adhesion between the electrode 12 active material and the current collector 100, and thus there may be a problem that the end portion of the electrode 12 active material is peeled off from the current collector 100. Accordingly, the adhesion between the first electrode active material layer 130 and the current collector 100 may be improved by pressing the end portion of the first electrode active material layer 130 coated on the current collector 100 to form the compressed portion 131.

Since the compressed portion 131 is pressed and compressed by the electrode cutting device 32, it may be formed to have a higher density than the uncompressed portion 132 located in the inner region with respect to the compression portion 131.

The uncompressed portion 132 is located in the inner region with respect to the compression portion 131 in the first electrode active material layer 130 and may be a region that is not pressed by the electrode cutting device 32. The uncompressed portion 132 may be formed to have a lower density than the compressed portion 131.

The end of the compressed portion 131 may be formed to coincide with the end of the current collector 100 as it is cut together with the current collector 100 by the electrode cutting device 32. Since the end of the compressed portion 131 is formed to coincide with the end of the current collector 100, the ratio of the uncoated portion, which is the region where the first electrode active material layer 130 is not coated, may be minimized, and the ratio of the coated portion, which is the region where the first electrode active material layer 130 is coated, may be increased. The coated portion, which substantially generates electrical energy through a chemical reaction, may improve the energy density of the electrode assembly 20 and the secondary battery accommodating the electrode assembly 20 of the same volume when the ratio thereof is increased.

The compressed portion 131 may be formed with a slope so that the upper surface decreases in height intermittently toward the current collector 100 as it approaches the end. The compressed portion 131 may be formed in a step shape in which the height decreases as it approaches the end.

The compressed portion 131 may include a first portion 131a, a second portion 131b, and a third section 131c.

The first portion 131a may form the end of the compressed portion 131 by cutting the first electrode active material layer 130 by the cutter 300 of the electrode cutting device 32, and may be formed in a direction perpendicular to one surface of the current collector 100 that is the cutting direction.

The first portion 131a forms a cutting surface in which the first electrode active material layer 130 is cut by the cutter 300 of the electrode cutting device 32, and may be formed in the same plane as the end of the current collector 100 to coincide with the end of the current collector 100.

The upper end of the first portion 131a may meet one end of the third portion 131c in a perpendicular direction to form an intersection.

The second portion 131b is spaced apart from the first portion 131a along the slope direction formed in the compressed portion 131 by a predetermined distance, and may be formed in a direction perpendicular to one surface of the current collector 100. The second portion 131b may be positioned at a higher height than the first portion 131a.

The upper end of the second portion 131b may meet one end of the uncompressed portion 132 to form an intersection.

The intersections may be formed in a region where the first portion 131a and the third portion 131c meet and in a region where the second portion 131b and the uncompressed portion 132 meet, and the intersections may form a slope that intermittently decreases or increases in height along the slope direction formed in the compressed portion 131. The intersections are regions in contact with the separator 210 when at least one of the electrode 12 and the separator 210 is stacked and wound to manufacture the electrode assembly 20, and may increase the contact area with the separator 210 to disperse force, and may gradually change the angle of the separator 210 to prevent the separator 210 from being bent and damaged due to the step caused by the thickness of the electrode 12.

The third portion 131c is formed between the first portion 131a and the second portion 131b, and may be formed in a direction perpendicular to the second portion 131b.

The third portion 131c may be formed by pressing the first electrode active material layer 130 by the pressing portion 320 of the electrode cutting device 321, and is compressed by the pressing of the pressing portion 320, so that the third portion 131c may form the step in a downward direction with respect to the uncompressed portion 132 toward the end. The second portion 131b may form the step between the uncompressed portion 132 and the third portion 131c, and may form a discontinuous slope by intermittently lowering the height of the first electrode active material layer 130 toward the end.

The third portion 131c may be formed by pressing the first electrode active material layer 130 by the pressing portion 320 of the electrode cutting device 32. Since the third portion 131c is pressed by the pressing portion 320, the first electrode active material layer 130 coated on the current collector 100 may be compressed to increase the density, to improve the adhesion to the current collector 100, and to prevent the first electrode active material layer 130 from being peeled off from the current collector 100 due to external impact, chemical reaction, or the like.

The second portion 131b and the third portion 131c may be provided in plurality, respectively. The compressed portion 131 may include a plurality of steps formed sequentially along the slope direction, and may be formed in a step shape formed sequentially along the slope direction.

The plurality of second portions 131b may be formed to be spaced apart from each other at a predetermined interval along the slope direction of the compressed portion 131. Therefore, the first portion 131a and the plurality of second portions 131b may be disposed sequentially along the slope direction of the compressed portion 131.

The plurality of third portions 131c may be disposed between the first portion 131a and the second portion 131b and between the plurality of second portions 131b. More specifically, the third portion 131c may connect the upper end of the first portion 131a and the lower end of the second portion 131b, and may connect the upper end of the second portion 131b and the lower end of the adjacent second portion 131b.

The plurality of third portions 131c may be formed to sequentially decrease in height toward the end according to the degree of compression of the electrode 12 active material. The degree of compression of the first electrode active material layer 130 increases toward the end of the compressed portion 131, and the plurality of third portions 131c may intermittently decrease in height toward the end of the compressed portion 131. That is, since the third portion 131c located at the most distal end among the plurality of third portions 131c has the greatest degree of compression of the electrode 12 active material, the density is the highest and the adhesion to the current collector 100 may be formed the greatest.

The plurality of third portions 131c may form intersections in regions where they meet the first portion 131a and the plurality of second portions 131b, respectively. A plurality of intersections formed by the plurality of third portions 131c meeting the first portion 131a and the plurality of second portions 131b may be sequentially disposed along the slope direction of the compressed portion 131. The plurality of intersections may contact one surface of the separator 210 in the electrode assembly 20 formed by stacking and winding the electrode 12 and the separator 210. The plurality of intersections may expand the contact area with one surface of the separator 210 to disperse force, and may cushion the impact that the separator 210 may receive.

Additionally, the plurality of intersections are sequentially disposed along the slope direction of the compressed portion 131 and form a slope, thereby reducing the angle at which the separator 210 is bent when contacting the end portion of the electrode 12, and thus it is possible to prevent the separator 210 from being bent and damaged by the height difference due to the end thickness of the electrode 12.

The electrode 12 may further include a second electrode active material layer 140 coated on the other surface of the current collector 100.

Descriptions of the second electrode active material layer 140 may be replaced by those described in Embodiment 1.

### Embodiment 4

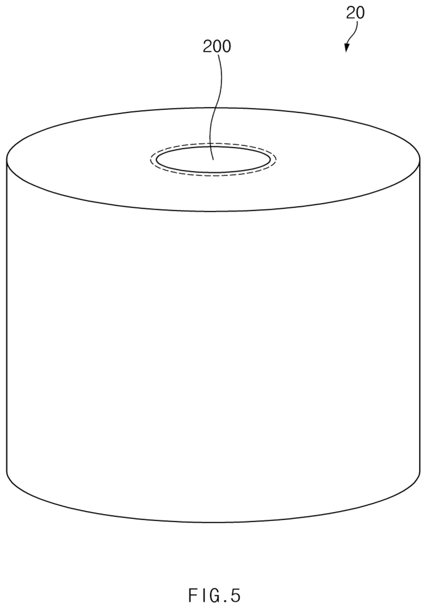

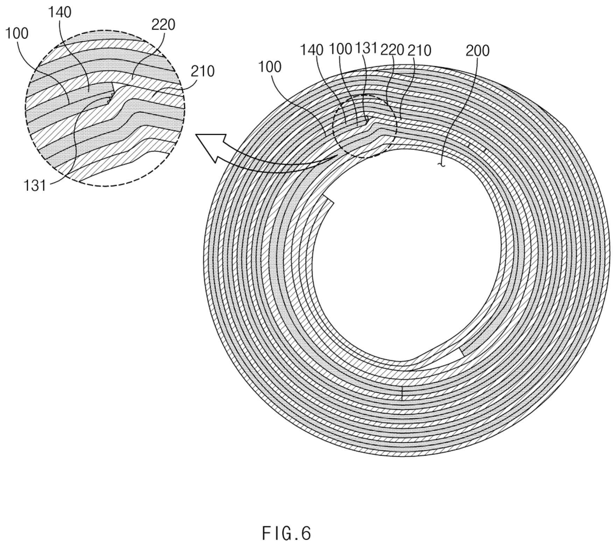

Referring to FIGS. 5 and 6, as Embodiment 4 of the present disclosure, the electrode assembly 20 is formed by stacking and winding at least one of the separators 210, 211 and the electrodes 10, 11, 12, and may include a core 200 formed at the center around which the separators 210, 211 and the electrodes 10, 11, 12 are wound.

The core 200 may refer to an empty space formed along a central axis around which the separators 210, 211 and the electrodes 10, 11, 12 are wound in the electrode assembly 20. The electrode assembly 20 may be formed in a shape surrounded by at least one separator 210, 211 and at least one electrode 10, 11, 12 around the core 200.

Referring to FIG. 6, the core 200 may be formed by winding at least one of the electrodes 10, 11, 12 and the separators 210, 220, and may be formed at the center of the winding. The wound electrodes 10, 11, 12 contact the separator 210 located inside the electrodes 10, 11, 12, and more specifically, the first electrode active material layers 110, 120, 130 may be disposed to contact the separator 210 located inside the electrodes 10, 11, 12. Since the separator 210 is formed to be longer than the electrodes 10, 11, 12, the end of the separator 210 may be formed to extend longer than the position of the end of the electrodes 10, 11, 12. The compressed portions 111, 121, 131 are formed at the end portion of the first electrode active material layers 110, 120, 130, and a slope is formed in the compressed portions 111, 121, 131 in a downward direction toward the end, so that the separator 210 may contact the slope formed in the compressed portions 111, 121, 131 and may be induced to gradually change the angle along the length direction without a sharp bending.

Additionally, the slope at the end portion of the electrodes 10, 11, 12 may increase the contact area with the separator 210, thereby cushioning the impact that the separator 210 may receive from the electrodes 10, 11, 12 due to external impact or internal impact.

The cross-sectional shape of the electrode assembly 20 may be formed in various ways depending on the structure in which the separators 210, 211 and the electrodes 10, 11, 12 are wound, and may be, for example, circular, oval, rectangular, or the like, but is not limited thereto.

A detailed description of the electrodes 10, 11, 12 included in the electrode assembly 20 may be replaced through the contents of Embodiment 1 to Embodiment 3 described above.

### Embodiment 5

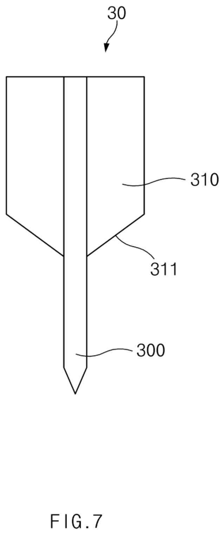

Referring to FIG. 7, as Embodiment 5 of the present disclosure, the electrode cutting device 30 may include a cutter 300 and a pressing portion 310.

The electrode cutting device 30 may be a device that cuts the current collector 100 coated with the first electrode active material layer 110 to a predetermined size and presses the end portion of the first electrode active material layer 110 coated on the current collector 100.

The cutter 300 may be provided to cut the current collector 100 coated with the first electrode active material layer 110.

The cutter 300 is disposed so that the end thereof faces the current collector 100 coated with the first electrode active material layer 110, and may be driven in a direction closer to or farther away from the current collector 100 coated with the first electrode active material layer 110.

The cutter 300 may be disposed in its width direction perpendicular to one surface of the current collector 100, and its length direction may be disposed along the width direction of the current collector 100.

The cutter 300 may be formed to gradually decrease in thickness from the end portion toward its end.

The pressing portion 310 may be formed to protrude from one side surface or both side surfaces of the cutter 300.

Since the pressing portion 310 is formed to protrude from the cutter 300, it may be driven together with the cutter 300, and when the cutter 300 cuts the electrode 10, the pressing portion 310 may be provided to press the end portion of the cut electrode 10.

As the pressing portion 310 presses the end portion of the cut electrode 10, the first electrode active material layer 110 coated on the current collector 100 may be compressed, and the adhesion between the first electrode active material layer 110 and the current collector 100 may be improved.

The pressing portion 310 may include an inclined pressing surface 311 formed with a continuous slope so as to move away from one side surface or both side surfaces of the cutter 300 as it is farther away from the end of the cutter 300.

The inclined pressing surface 311 may press the end portion of the first electrode active material layer 110 to form an inclined surface 112 having a shape corresponding to the inclined pressing surface 311 at the end portion of the first electrode active material layer 110.

The inclined pressing surface 311 may compress the end portion of the first electrode active material layer 110 by pressing the end portion of the first electrode active material layer 110, and the closer the position is to the cutter 300, the more strongly the first electrode active material layer 110 may be pressed. That is, since the inclined pressing surface 311 presses the end of the first electrode active material layer 110 most strongly, the adhesion between the end of the first electrode active material layer 110 and the current collector 100 may be formed to be the greatest so that the first electrode active material layer 110 is not peeled off from the current collector 100.

### Embodiment 6

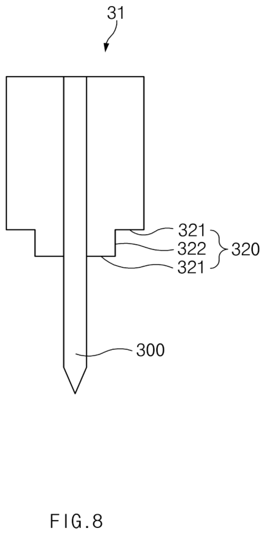

Referring to FIG. 8, as Embodiment 6 of the present disclosure, the electrode cutting device 31 may include a cutter 300 and a pressing portion 320.

The electrode cutting device 31 may be a device that cuts the current collector 100 coated with the first electrode active material layer 120 to a predetermined size and presses the end portion of the first electrode active material layer 120 coated on the current collector 100.

The cutter 300 may be provided to cut the current collector 100 coated with the first electrode active material layer 120.

The cutter 300 is disposed so that the end thereof faces the current collector 100 coated with the first electrode active material layer 120, and may be driven in a direction closer to or farther away from the current collector 100 coated with the first electrode active material layer 120.

The cutter 300 may be disposed in its width direction perpendicular to one surface of the current collector 100, and its length direction may be disposed along the width direction of the current collector 100.

The cutter 300 may be formed to gradually decrease in thickness from the end portion toward its end.

When the first electrode active material layer 120 is cut by the cutter 300, the first portion 121a may be formed on the cutting surface.

The pressing portion 320 may be formed to protrude from one side surface or both side surfaces of the cutter 300. When the pressing portion 320 is formed on both side surfaces of the cutter 300, the end portions of each electrode 11 cut into a plurality of pieces by the cutter 300 may be pressed. The cutter 300 linearly reciprocates over a predetermined region, and referring to FIG. 1, the electrode 11 continuously moves in a direction perpendicular to the movement direction of the cutter 300 through a conveyor, a moving means, or the like, so that one end and the other end of the electrode 11 are cut by the cutter 300, and both end portions of the electrode 11 may be pressed by the pressing portion 320.

Since the pressing portion 320 is formed to protrude from one side surface or both side surfaces of the cutter 300, it may be driven and moved together with the cutter 300, and when the cutter 300 cuts the electrode 11, the pressing portion 320 may press the end portion of the cut electrode 11.

As the pressing portion 320 presses the end portion of the cut electrode 11, the first electrode active material layer 120 coated on the current collector 100 may be compressed, and the adhesion between the first electrode active material layer 120 and the current collector 100 may be improved.

The pressing portion 320 may include a pressing surface formed with a slope so that the height of the protrusion increases intermittently as it is farther away from the end of the cutter 300. That is, the pressing portion 320 may include a step shape.

The pressing surface may include a first pressing surface 321 and a second pressing surface 322.

The first pressing surface 321 may be provided in plurality, and the plurality of first pressing surfaces 321 may be disposed to be spaced apart from each other by a predetermined distance along the slope direction of the pressing surface.

The first pressing surface 321 may be formed in a direction perpendicular to one side surface of the cutter 300, and may be disposed to face the electrode 11 cut by the cutter 300.

The first pressing surface 321 may press the end portion of the first electrode active material layer 120 when the cutter 300 cuts the electrode 11. The first pressing surface 321 formed at the closest position to the cutter 300 among the plurality of first pressing surfaces 321 presses the first electrode active material layer 120 most strongly, so that the end of the first electrode active material layer 120 located at the closest position to the cutter 300 is formed to have the highest density, and may form the greatest adhesion to the current collector 100.

The first pressing surface 321 may press the end portion of the first electrode active material layer 120 to form the third portion 121c.

The second pressing surface 322 may be formed between the plurality of first pressing surfaces 321, and may be formed in a direction perpendicular to the first pressing surface 321. The second pressing surface 322 may form a step-shaped step between the plurality of first pressing surfaces 321.

The second pressing surface 322 may press the end portion of the first electrode active material layer 120 to form the second portion 121b.

### Embodiment 7

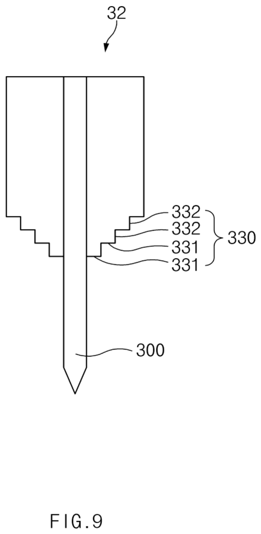

Referring to FIG. 9, as Embodiment 7 of the present disclosure, the electrode cutting device 32 may include a cutter 300 and a pressing portion 330.

The electrode cutting device 32 may be a device that cuts the current collector 100 coated with the first electrode active material layer 130 to a predetermined size and presses the end portion of the first electrode active material layer 130 coated on the current collector 100.

The cutter 300 may be provided to cut the current collector 100 coated with the first electrode active material layer 130.

The cutter 300 is disposed so that the end thereof faces the current collector 100 coated with the first electrode active material layer 130, and may be driven in a direction closer to or farther away from the current collector 100 coated with the first electrode active material layer 130.

The cutter 300 may be disposed in its width direction perpendicular to one surface of the current collector 100, and its length direction may be disposed along the width direction of the current collector 100.

The cutter 300 may be formed to gradually decrease in thickness from the end portion toward its end.

When the first electrode active material layer 130 is cut by the cutter 300, the first portion 131a may be formed on the cutting surface.

The pressing portion 330 may be formed to protrude from one side surface or both side surfaces of the cutter 300. When the pressing portion 330 is formed on both side surfaces of the cutter 300, the end portions of each electrode 12 cut into a plurality of pieces by the cutter 300 may be pressed. Referring to FIG. 1, the cutter 300 linearly reciprocates over a predetermined region, and the electrode 12 continuously moves in a direction perpendicular to the movement direction of the cutter 300 through a conveyor, a moving means, or the like, so that one end and the other end of the electrode 12 are cut by the cutter 300, and both end portions of the electrode 12 may be pressed by the pressing portion 330 to form the compressed portion 131.

Since the pressing portion 330 is formed to protrude from one side surface or both side surfaces of the cutter 300, it may be driven and moved together with the cutter 300, and when the cutter 300 cuts the electrode 12, the pressing portion 330 may press the end portion of the cut electrode 12.

As the pressing portion 330 presses the end portion of the cut electrode 12, the first electrode active material layer 130 coated on the current collector 100 may be compressed, and the adhesion between the first electrode active material layer 130 and the current collector 100 may be improved.

The pressing portion 330 may include a pressing surface formed with a slope so that the height of the protrusion increases intermittently as it is farther away from the end of the cutter 300. That is, the pressing portion 330 may be formed in a step shape.

The pressing surface may include a first pressing surface 331 and a second pressing surface 332.

The first pressing surface 331 may be provided in plurality, and the plurality of first pressing surfaces 331 may be disposed to be spaced apart from each other by a predetermined distance along the slope direction of the pressing surface.

The first pressing surface 331 may be formed in a direction perpendicular to one side surface of the cutter 300, and may be disposed to face the electrode 12 cut by the cutter 300.

The first pressing surface 331 may press the end portion of the first electrode active material layer 130 when the cutter 300 cuts the electrode 12. The first pressing surface 331 formed at the closest position to the cutter 300 among the plurality of first pressing surfaces 331 presses the first electrode active material layer 130 most strongly, so that the first electrode active material layer 130 located at the closest position to the cutter 300 is formed to have the highest density, and may form the greatest adhesion to the current collector 100.

The first pressing surface 331 may press the end portion of the first electrode active material layer 130 to form the third portion 131c.

The second pressing surface 332 may be formed between the plurality of first pressing surfaces 331, and may be formed in a direction perpendicular to the first pressing surface 331. The second pressing surface 332 may form a step-shaped step between the plurality of first pressing surfaces 331.

The second pressing surface 332 may press the end portion of the first electrode active material layer 130 to form the second portion 131b.

The second pressing surface 332 may be provided in plurality, and the plurality of second pressing surfaces 332 may be formed to connect between the plurality of first pressing surfaces 331.

The plurality of second pressing surfaces 332 may be disposed at a predetermined interval along the slope of the inclined pressing surface.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10, 11, 12: Electrode
20: Electrode assembly
30, 31, 32: Cutter
100: Current collector
110, 120, 130: First electrode active material layer
111, 121, 131: Compressed portion
112: Inclined surface
113, 122, 132: Uncompressed portion
121a, 131a: First portion
121b, 131b: Second portion
121c, 131c: Third portion
140: Second electrode active material layer
200: Core
210, 220: Separator
300: Cutter
310, 320, 330: Pressing portion
311: Inclined pressing surface
321, 331: First pressing surface
322, 332: Second pressing surface

## Claims

**1.** An electrode, comprising:
a current collector formed of a metal foil;
a first electrode active material layer coated on one surface of the current collector and having a compressed portion compressed by pressing a predetermined region formed, and
a second electrode active material layer coated on the other surface of the current collector,
wherein the compressed portion is formed at the end portion of the first electrode active material layer and has a higher density than a region located further inward than the compressed portion.

**2.** The electrode according to claim 1,
wherein the end of the compressed portion coincides with the end of the current collector.

**3.** The electrode according to claim 2,
wherein the second electrode active material layer is formed asymmetrically with the first electrode active material layer based on the current collector.

**4.** The electrode according to claim 1,
wherein the compressed portion is formed as a continuous inclined surface with the upper surface facing the current collector.

**5.** The electrode according to claim 1,
wherein the compressed portion is formed with a slope so that the upper surface decreases in height intermittently toward the current collector as it approaches the end.

**6.** The electrode according to claim 5,
wherein the compressed portion comprises:
a first portion forming the end of the compressed portion and formed in a direction perpendicular to one surface of the current collector;
a second portion spaced apart from the first portion by a predetermined distance along the slope direction and formed in a direction perpendicular to one surface of the current collector; and
a third portion connecting the first portion and the second portion and formed in a direction perpendicular to the second portion.

**8.** The electrode according to claim 6,
wherein the second portion and the third portion are provided in plurality,
the plurality of second portions are formed to be spaced apart from each other along the slope direction, and
the plurality of third portions are formed to connect the first portion and the second portion and between the plurality of second portions.

**8.** The electrode according to claim 7,
wherein the compressed portion further comprises:
a plurality of fourth portions protruding outward in a region where the first portion and the third portion meet and in a region where the second portion and the third portion meet.

**9.** An electrode assembly in which at least one of a separator and an electrode is stacked and wound, comprising:
a core formed at the center around which the separator and the electrode are wound,
wherein the electrode comprises:
a current collector; and
a first electrode active material layer coated on one surface of the current collector and having a compressed portion compressed by pressing a predetermined region formed,
wherein the compressed portion is formed at the end portion of the first electrode active material layer and is disposed to face the core so that the separator may cover it, and
the compressed portion is formed to have a higher density than a region located further inward than the compressed portion along the winding direction of the first electrode active material layer.

**10.** The electrode assembly according to claim 9,
wherein the compressed portion is formed as a continuous inclined surface with the upper surface facing the current collector.

**11.** The electrode assembly according to claim 9,
wherein the compressed portion is formed with a slope so that the upper surface decreases in height intermittently toward the current collector as it approaches the end.

**12.** An electrode cutting device, comprising:
a cutter provided to cut a current collector coated with an electrode active material; and
a pressing portion that protrudes from both side surfaces of the cutter at a position spaced apart from the end of the cutter and presses one side surface of the cutting surface cut by the cutter to increase the density of the electrode active material.

**13.** The electrode cutting device according to claim 12,
wherein the pressing portion comprises an inclined pressing surface formed with a continuous slope so as to move away from both side surfaces of the cutter as it is farther away from the end of the cutter.

**14.** The electrode cutting device according to claim 12,
wherein the pressing portion comprises an inclined pressing surface formed with a slope so that the height of the protrusion increases intermittently as it is farther away from the end of the cutter.

**15.** The electrode cutting device according to claim 14,
wherein the inclined pressing surface comprises:
a first pressing surface formed to face the cutting direction of the cutter; and
a second pressing surface extending from the end of the first pressing surface in a direction perpendicular to the first pressing surface.

**16.** The electrode cutting device according to claim 15,
wherein the first pressing surface is provided in plurality, and
the plurality of first pressing surfaces are disposed being spaced apart from each other along the slope direction of the inclined pressing surface.

**17.** The electrode cutting device according to claim 16,
wherein the second pressing surface is provided in plurality, and
the plurality of second pressing surfaces are disposed at each end of the plurality of first pressing surfaces along the slope direction of the inclined pressing surface.
